(19) **Europäisches Patentamt / European Patent Office / Office européen des brevets**

(11) **EP 1 640 188 B1**

(12) **EUROPEAN PATENT SPECIFICATION**

(45) Date of publication and mention
of the grant of the patent:
**28.10.2009 Bulletin 2009/44**

(51) Int Cl.:
**B60C 15/06** (2006.01)    **B60C 13/00** (2006.01)
**B60C 1/00** (2006.01)

(21) Application number: **04745970.6**

(86) International application number:
**PCT/JP2004/008428**

(22) Date of filing: **16.06.2004**

(87) International publication number:
**WO 2004/110792 (23.12.2004 Gazette 2004/52)**

(54) **PNEUMATIC TIRE**

LUFTREIFEN

PNEU

(84) Designated Contracting States:
**DE FR IT**

(30) Priority: **17.06.2003   JP 2003171958**

(43) Date of publication of application:
**29.03.2006   Bulletin 2006/13**

(73) Proprietor: **THE YOKOHAMA RUBBER CO., LTD.**
**Tokyo 105-8685 (JP)**

(72) Inventors:
• **Tanaka, Katsunori,**
**c/o The Yokohama Rubber Co., Ltd.**
**Hiratsuka-shi,**
**Kanagawa 254-8601 (JP)**
• **Kuze, Tetsuya,**
**c/o The Yokohama Rubber Co., Ltd.**
**Hiratsuka-shi,**
**Kanagawa 254-8601 (JP)**

• **Tanno, Atsushi,**
**c/o The Yokohama Rubber Co., Ltd.**
**Hiratsuka-shi,**
**Kanagawa 254-8601 (JP)**
• **Amino, Naoya,**
**c/o The Yokohama Rubber Co., Ltd.**
**Hiratsuka-shi,**
**Kanagawa 254-8601 (JP)**

(74) Representative: **HOFFMANN EITLE**
**Patent- und Rechtsanwälte**
**Arabellastrasse 4**
**81925 München (DE)**

(56) References cited:
**JP-A- 8 207 516        JP-A- 11 124 471**
**JP-A- 11 254 904       JP-A- 2001 071 715**
**JP-A- 2003 175 708**

## Description

### TECHNICAL FIELD

The present invention relates to a pneumatic tire provided with a bead filler on the outer periphery of a bead core. More specifically, the present invention relates to a pneumatic tire allowed to improve driving stability, road noise, riding comfort and a fuel economy performance in a balanced manner.

### BACKGROUND ART

In a pneumatic tire, what is performed in order to secure driving stability is to bury therein a bead filler extending from a bead portion to a sidewall portion, the bead filler being formed of a hard rubber composition. Furthermore, there has been proposed an approach to improve a variety of tire performances by devising cross-sectional shapes of the bead filler.

For example, there has been proposed an approach where: an increase in circumferential stiffness and a reduction in longitudinal stiffness are achieved compatibly by elongating a cross-sectional shape of the bead filler, and as a result, road noise having frequencies around 40 Hz and around 100 Hz is reduced (refer to Patent Document 1, for example). However, since a lateral spring constant is insufficient with an elongated bead filler provided therein, driving stability is not necessarily sufficient.

Additionally, there has been proposed an approach where: driving stability, riding comfort and a low-noise characteristic are improved by arranging a bead filler and a sheet-like sidewall reinforcement layer in a region from the bead portion to the sidewall portion (refer to Patent Document 2, for example). The bead filler has a cross-sectional triangular shape that is located at the position lower than a rim flange. The sheet-like sidewall reinforcement layer extends from a tapered position of the bead filler to a vicinity of an end of a belt.

However, in the above reinforcement structure combining the bead filler and the sidewall reinforcement layer, a force is insufficiently transmitted between the bead filler and the sidewall reinforcement layer, and thereby a lateral spring constant and a circumferential spring constant cannot be made sufficiently high. In addition, the small bead filler has an insufficient ability to bring about an effect of reinforcing the bead portion, and thereby a lateral spring constant cannot be made sufficiently high. Therefore, driving stability is not necessarily sufficient. Furthermore, if the vicinity of the end of the belt is reinforced, rolling resistance is increased and hence a fuel economy performance is deteriorated.

As described above, it is difficult to compatibly improve a variety of tire performances based on the reinforcement structure applied to the bead portion and the sidewall portion. To allow the tire to exert the best performances, it is required to fully define the reinforcement structure of the tire.

[Patent Document 1] Japanese patent application _Kokai_ publication No. Hei8-276713
[Patent Document 2] Japanese patent application _Kokai_ publication No. 2001-71715

### DISCLOSURE OF THE INVENTION

An object of the present invention is to provide a pneumatic tire allowed to improve driving stability, road noise, riding comfort and a fuel economy performance in a balanced manner.

A pneumatic tire according to the present invention for achieving the above object is a pneumatic tire where: a carcass layer is mounted between a pair of a left and a right bead portions; a plurality of belt layers are arranged on an outer periphery of the carcass layer located in a tread portion; and a bead filler is arranged on an outer periphery of a bead core in each of the bead portions. The pneumatic tire is characterized in that: the bead filler is made wider than a triangle formed by connecting its base and top, in a cross-sectional view taken along a meridian of the tire; and a sheet-like auxiliary filler is arranged from the sidewall portion to the bead portion, the sheet-like auxiliary filler having a thickness of 0.5 to 2.0 mm and being formed of a material harder than neighboring rubber compositions except for a rubber composition of the bead filler. Moreover, when: on an inner surface of the tire, a point located at an upper end of the bead core is denoted as A1; a point at which a perpendicular line extended down from an end of the layered part of the belt layers intersects with the inner surface of the tire is denoted as A2; points by which a periphery length from A1 to A2 is divided into three equal parts are denoted as B1 and B2 in the order of proximity to the bead core; a lower end and an upper end of the auxiliary filler are denoted as C1 and C2 respectively; a top of the bead filler is denoted as D; points by which a height L of the bead filler in a radial direction of the tire is divided into three equal parts are denoted as E1 and E2 in the order of proximity to the bead core, the pneumatic tire is also characterized in that: the top D of the bead filler is at a position lower than the point B1 and at least 5 mm higher than the rim flange; the lower end C1 of the auxiliary filler is at a position higher than the point A1 and lower than the point E2; and the upper end C2 of the auxiliary filler is at a position lower than the point A2, apart from the point A2 by at least 10 mm, and higher than the point B2.

The present invention was made based on the following expertise. Since driving stability is influenced largely by distortion of a tire occurring against a lateral force imposed at the time of cornering, an increase in lateral spring constant contributes to improvement in driving stability. Road noise is vibration noise attributable to vibrations from a road surface, and an important factor thereof is a natural vibration frequency of the tire (influenced by its weight and spring constants). In particular, since road noise having a frequency around 40 Hz is improved by increasing a natural vibration frequency in a circumferential direction of the tire, it is preferable that a circumferential spring constant be increased. In addition, road noise at a frequency around 100 Hz is improved by reducing a natural vibration frequency in a radial direction of the tire, it is desirable that a longitudinal spring constant be decreased.

Riding comfort, as well as road noise, is attributable to vibrations from a road surface. In particular, an increase in circumferential spring constant and a reduction in longitudinal spring constant are effective respectively in enhancing harshness and in enhancing a vibration damping property. This matches improvements in road noise at a frequency around 40 Hz and in road noise at a frequency around 100 Hz. Rolling resistance is a force generated in a direction reverse to a traveling direction generated when the tire rolls, and affects a fuel economy performance. To sum up, if a reduction in longitudinal spring constant, an increase in lateral spring constant, an increase in circumferential spring constant, and a reduction in rolling resistance are compatibly achieved, it becomes possible to enhance driving stability, road noise, riding comfort and a fuel economy performance.

As a result of ardently researching a relation between a reinforcement position and a spring constant in view of such expertise as described above, inventors of the present invention obtained expertise that an influence on a longitudinal spring constant, a lateral spring constant and a circumferential spring constant varies each time when a different reinforcement position is taken. Specifically, relations described in (1) to (3) were found as follows.

(1) In order to increase lateral stiffness (a lateral spring constant), it is preferable that a reinforcement layer in the bead portion be made thick.
(2) In order to reduce longitudinal stiffness (a longitudinal spring constant), it is preferable that a reinforcement layer in the sidewall portion be made thin.
(3) In order to increase circumferential stiffness (a circumferential spring constant), it is preferable that a reinforcement layer be arranged continuously from the bead portion to a shoulder portion. Note that since rolling resistance is deteriorated by reinforcing the vicinity of the end of the belt, it is essential that the reinforcement layer be arranged somewhat apart from the end of the belt.

Consequently, in the present invention, while the bead filler located on an outer periphery of the bead core and having a triangular cross-sectional shape is made wider, the sheet-like auxiliary filler is arranged from the sidewall portion to the bead portion. By defining measurements of these bead filler and auxiliary filler, the conditions described in (1) to (3) are compatibly satisfied. As a result, a reinforcement structure by which rolling resistance and a longitudinal spring constant are reduced and a lateral spring constant and a circumferential spring constant are increased is actualized. Thereby, it becomes possible to enhance driving stability, road noise, riding comfort and a fuel economy performance in a balanced manner.

In the present invention, the bead filler is made wider than a triangle formed by connecting its base and top, in a cross-sectional view taken along a meridian of the tire. More specifically, it is preferable that, with a filler width $b$ at the base thereof, a filler width $bx$ at a position lower than, and apart by a distance X from, the top D of the bead filler satisfy the following relation. Note that $n$ is an index, and satisfies $1/3 \leq n \leq 1$.

$$bx = b \times (X/L)^n$$

In view of enhancing surface-damage resistance, it is preferable that the auxiliary filler be arranged outward from the carcass layer in a width-wise direction of the tire. It is also preferable that a thickness of the auxiliary filler be uniform.

The bead filler may be formed of elastomer, preferably a rubber composition, having a JIS-A hardness of 70 to 100. On the other hand, the auxiliary filler may be formed of elastomer, preferably a rubber composition, having a JIS-A hardness of 70 to 100. In particular, it is preferable that the rubber composition forming the auxiliary filler have a loss tangent (tan$\delta$) of 0.01 to 0.25 when measured at a temperature of 60 °C, a JIS-A hardness of 70 to 95 when measured at a temperature of 23 °C, and a breaking elongation not less than 200% when measured at a temperature of 23 °C in a tensile test.

In the case where the sheet-like auxiliary filler is arranged on the sidewall portion as described above, it is required to make thin a sidewall rubber layer which is arranged outward of the auxiliary filler in a width-wide direction of the tire and is exposed to an outer surface of the tire. However, if the sidewall rubber layer is made thin, there is a risk of deteriorating weather resistance of the tire due to deficiency of antioxidant. Consequently, it is preferable that the sidewall rubber layer arranged outward of the auxiliary filler in a width-wise direction of the tire be formed of a rubber composition including, in 100 weight parts of a rubber component, 20 to 70 weight parts of rubber formed by halogenating a copolymer obtained by causing isoolefin to react with paramethyl styrene, and 30 to 80 weight parts of diene rubber. The rubber component thus obtained is excellent in weather resistance, and accordingly, reduced weather resistance due to a thinner formation of the sidewall rubber layer can be effectively complemented.

BRIEF DESCRIPTION OF THE DRAWINGS

Fig. 1 is a half cross-sectional view showing a pneumatic tire according to an embodiment of the present invention.
Fig. 2 is a cross-sectional view for explaining a shape of a bead filler in a pneumatic tire according to the invention.
Fig. 3 is a half cross-sectional view showing a pneumatic tire according to another embodiment of the invention.
Fig. 4 is a half cross-sectional view schematically showing a pneumatic tire according to still another embodiment of the invention.

BEST MODES FOR CARRYNG OUT THE INVENTION

Hereinafter, a detailed description will be given of a configuration of the present invention with reference to the attached drawings.

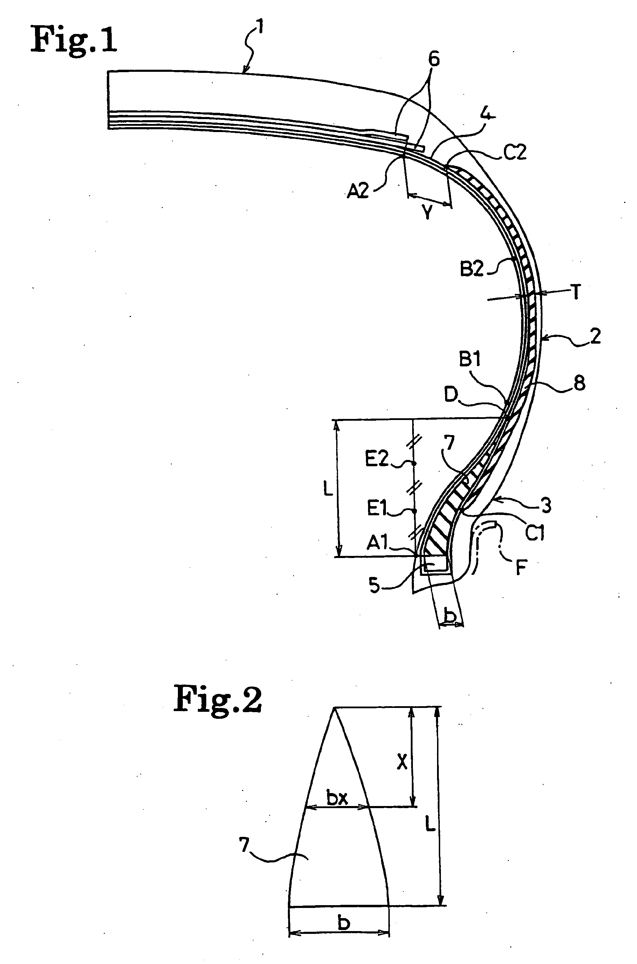

Fig. 1 shows a pneumatic tire according to an embodiment of the present invention. In Fig. 1, reference numerals 1, 2, and 3 respectively denote a tread portion, a sidewall portion, and a bead portion. A carcass layer 4 is mounted between a pair of the left and right bead portions 3 and 3, and has an end part folded back from the inside to the outside of the tire around a bead core 5. A plurality of belt layers 6, 6 are buried on the outer periphery of the carcass layer 4 in the tread portion 1. These belt layers 6, 6 are arranged in order that cords can tilt to a circumferential direction of the tire and that the cords can cross one another between the layers.

On the outer periphery of each of the bead cores 5, a bead filler 7 is buried in a manner the bead filler 7 is sandwiched between a main portion and a turned-up portion respectively of the carcass layer 4. This bead filler 7 is formed of elastomer having a JIS-A hardness of 70 to 100. On the other hand, from the sidewall portion 2 to the bead portion 3, a sheet-like auxiliary filler 8 is buried outward of the carcass layer 4 in a width-wide direction of the tire. This auxiliary filler 8 has a thickness T of 0.5 to 2.0 mm and is formed of a material harder than neighboring rubber compositions except for the bead filler 7, an example of the material being elastomer having a JIS-A hardness of 70 to 100.

Here, on an inner surface of the tire, a point located at an upper end of the bead core 5 is denoted as A1; a point at which a perpendicular line extended down from an end of the layered part of the belt layers 6, 6 intersects with the inner surface of the tire is denoted as A2; points by which a periphery length from A1 to A2 is divided into three equal parts are denoted as B1 and B2 in the order of proximity to the bead core 5; a lower end and an upper end of the auxiliary filler 8 are denoted as C1 and C2 respectively; a top of the bead filler 7 is denoted as D; points by which a height L of the bead filler 7 in a radial direction of the tire is divided into three equal parts are denoted as E1 and E2 in the order of proximity to the bead core 5.

Here, the top D of the bead filler 7 is set at a position lower than the point B1 and at least 5 mm higher than a rim flange F. A position of the rim flange is determined based on a standard rim defined in JMTMA Yearbook (the year 2002 version). Additionally, the lower end C1 of the auxiliary filler 8 is set at a position higher than the point A1 and lower than the point E2, and more preferably, at a position close to the point E1 corresponding to a centroid position of the beat filler 7. Furthermore, the upper end C2 of the auxiliary filler 8 is set at a position lower than the point A2, apart from the point A2 with a distance Y being at least 10 mm, the distance being measured along the inner surface of the tire, and higher than the point B2.

The bead filler 7 forms a substantially triangular shape in a cross section taken along a meridian of the tire, and has its width wider than the triangle formed by connecting its base and top. With respect to a width of the bead filler 7, a description will be given with reference to Fig. 2. As shown in Fig. 2, with a filler width $b$ at the base thereof, a filler width $bx$ at a position lower than, and apart by a distance X from, the top D of the bead filler 7 satisfies the following relation. That is, when $1/3 \leq n \leq 1$, a cross-sectional shape wider than a triangle having a base of $b$ and a height of L.

$$bx = b \times (X/L)^n$$

In the present invention, in order to increase a lateral spring constant, the bead filler 7 is made to form an equal-beam shape wider than a triangle formed by connecting its base and top in a cross-sectional view of a meridian of the tire, an index $n$ defining its shape is set to be 0.33 to 1.00, and moreover, the sheet-shaped auxiliary filler 8 is combined therewith. Here, the top D of the bead filler 7 is arranged between the rim flange F and the point B1. In a case where the top D of the bead filler 7 is lower than the rim flange, a lateral spring constant is considerably decreased. Additionally, in a case where the top D of the bead filler 7 is at a position higher than the point B1, a longitudinal constant is increased more than necessary since the shoulder portion is reinforced excessively.

Furthermore, a thin and high bead filler structure is formed by inserting the auxiliary filler 8 from the sidewall portion 2 to the bead portion 3, and thereby an increase in circumferential stiffness and a reduction in longitudinal stiffness are made possible. In particular, in a case where the auxiliary filler 8 is arranged outward of the turned-up portion of the carcass layer 4, surface-damage resistance is enhanced. Since rolling resistance is considerably deteriorated by excessively reinforcing the end of the belt layer 6, it is required that the upper end C2 of the auxiliary filler 8 be at least 10 mm apart from the point A2. On the other hand, in a case where the lower end C1 of the auxiliary filler 8 is higher than the point E2, a force is insufficiently transmitted between the bead filler 7 and the auxiliary filler 8, and thereby a circumferential spring constant is considerably reduced. Furthermore, in a case where the lower end C1 of the auxiliary filler 8 is arranged lower than the point A1, a longitudinal spring constant is increased more than necessary.

It is preferable that a rubber composition forming the above auxiliary filler 8 have a loss tangent (tanδ) of 0.01 to 0.25 when measured at a temperature of 60 °C, a JIS-A hardness of 70 to 95 when measured at a temperature of 23 °C, and a breaking elongation not less than 200% when measured at a temperature of 23 °C in a tensile test.

With regard to the rubber composition forming the auxiliary filler 8, it is technically difficult to make its loss tangent at 60 °C less than 0.01, and on the other hand, rolling resistance increases if the loss tangent exceeds 0.25. A more desirable range of the loss tangent is 0.07 to 0.25. Note that the loss tangent (tanδ) here is the one measured by using a viscoelastic spectrometer (manufactured by Toyo Seiki Seisaku-sho, Ltd.), with the conditions of a frequency of 20 Hz, an initial distortion of 10 %, and a dynamic distortion of plus or minus 2%.

Additionally, with regard to the rubber composition forming the auxiliary filler 8, road noise at a frequency around 40 Hz is deteriorated if the JIS-A hardness is less than 70. On the other hand, if the JIS-A hardness exceeds 95, rolling resistance is deteriorated while road noise at a frequency around 100 Hz is deteriorated. Moreover, with regard to the rubber composition forming the auxiliary filler 8, if the breaking elongation is less than 200% when measured at a temperature of 23 °C in a tensile test, durability of the tire is deteriorated. Although it is not required to particularly limit an upper limit of the breaking elongation, the upper limit is about 350% in reality. Note that the breaking elongation here is the one measured in compliance with JIS K6251.

What can be used as a rubber composition exhibiting the above physical properties is one formed in a manner that 20 to 120 weight parts of silica and 0 to 60 weight parts of carbon black are mixed with 100 weight parts of rubber. In a case where a mixed amount of silica is out of the above range, it becomes difficult to obtain the above physical properties. In a case where carbon black is additionally mixed, it becomes difficult to obtain the above physical properties if a mixed amount of carbon black exceeds 60 weight parts.

As silica, for example, dry-method white carbon, wet-method white carbon, colloidal silica, and precipitated silica can be cited. These kinds of silica may be used by one or in combination of two or more.

As base rubber, for example, natural rubber (NR) and styrene-butadiene copolymer rubber (SBR) can be cited. These kinds of rubber may be used by one or in combination of two or more. Additionally, to the rubber component thus obtained, in addition to silica and carbon black, a compounding agent used regularly may be added. As compounding agents, for example, process oil, vulcanizer, vulcanization accelerator, antioxidant, and plasticizer can be cited.

The pneumatic tire configured as above includes the bead filler 7 made wider than a triangle formed by connecting its base and top, the sheet-like auxiliary filler 8 arranged from the sidewall portion 2 to the bead portion 3, and the measurements of these bead filler 7 and auxiliary filler 8 appropriately defined. For these reasons, driving stability, road noise, riding comfort and a fuel economy performance can be respectively improved to high levels.

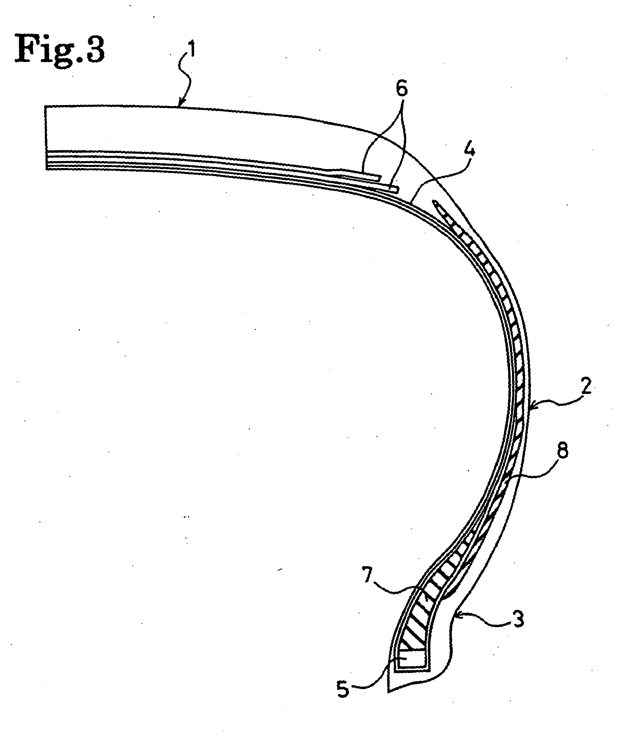

Fig. 3 shows a pneumatic tire according to another embodiment of the invention. In this embodiment, a constituent corresponding to the same constituent in Fig. 1 is denoted by the same reference numeral for that same constituent, and a detailed description thereof will be omitted. As shown in Fig. 3, the auxiliary filler 8 is partially apart form the carcass layer 4. Even with this structure, the same operations and effects as described above can be obtained.

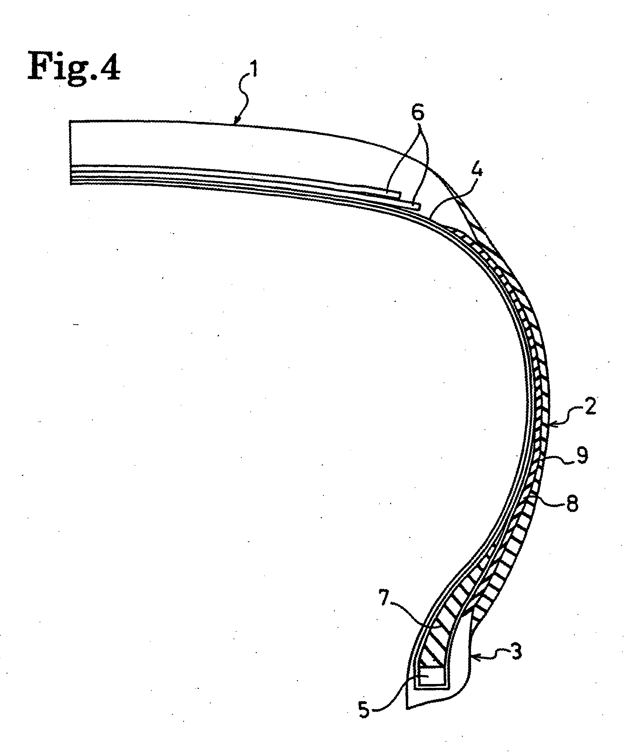

Fig. 4 shows a pneumatic tire according to still another embodiment of the invention. In this embodiment as well, a constituent corresponding to the same constituent in Fig. 1 is denoted by the same reference numeral for that same constituent, and a detailed description thereof will be omitted.

In the case where the sheet-like auxiliary filler 8 is arranged in the sidewall portion 2 as done in the foregoing embodiments, it is required to make the sidewall rubber layer, which is arranged outward of the auxiliary layer 8 in a width-wise direction of the tire and is exposed to the outer surface of the tire, to be thin in order that an increase in weight of the tire as a whole can be avoided. However, if the sidewall rubber layer is made thin, there is a risk that weather resistance may become poor due to deficiency of antioxidant.

For that reason, as shown in Fig. 4, it is preferable that the side wall layer 9 arranged outward of the auxiliary filler 8 in a width-wise direction of the tire be formed of a rubber composition including, in 100 weight parts of a rubber component, 20 to 70 weight parts of rubber (hereinafter, referred to as a halogenated PMS modified polymer) formed by halogenating a copolymer obtained by causing isoolefin to react with paramethyl styrene (PMS) and 30 to 80 weight parts of diene rubber. The rubber component thus obtained is excellent in weather resistance, and accordingly, reduced weather resistance due to a thinner formation of the sidewall rubber layer 9 can be effectively complemented.

As isoolefin, for example, isobutylene, 2-methyl-1-butene, 3-methyl-1-butene, 2-methyl-2-butene, or 2,3-dimethyl-2-butene can be used. In addition, as halogen, chlorine, bromine, iodine or the like can be used. That halogenated PMS modified polymer does not include a double bond in a backbone molecule, and hence is not prone to oxidation degradation and ozone degradation due to oxygen and ozone in the air.

As diene rubber, natural rubber (NR), isoprene rubber (IR), styrene-butadiene copolymer rubber (SBR), butadiene rubber (BR), butyl rubber (IIR), halogenated butyl rubber or the like can be used. As a matter of course, a compounding agent used regularly can be added to the rubber component forming the sidewall rubber layer 9. As compounding agents, for example, carbon black, process oil, vulcanizer, vulcanization accelerator, antioxidant, and plasticizer can be cited.

While the detailed descriptions have been given of the preferred embodiments of the present invention hereinabove, it should be understood that various modifications to, substitutions for, and replacements with the preferred embodiments can be carried out as long as the modifications to, the substitutions for, and the replacements do not depart from the spirit and the scope of the present invention defined by the attached claims.

EXAMPLES

A conventional example, examples 1 to 7, and comparative examples 1 to 10 were respectively manufactured. These examples respectively correspond to pneumatic tires with a tire size of 205/65R15 which are the same except that different kinds of reinforcement structures were employed in their side wall portions and bead portions as shown in Tables 1 and 2.

Note that, for each of the tires, a JIS-A hardness of its carcass coat rubber was set to be 64, a JIS-A hardness of its sidewall rubber was set to be 65, a height (a height from an upper end of the bead core) of the point B1 was set to be 43 mm, a height (a height from an upper end of the bead core) of its rim flange was set to be 15 mm, a filler width $b$ at a base of its bead filler was set to be 8 mm, and a JIS-A hardness of its bead filler was set to be 92.

With regard to these test tires, road noise, riding comfort, driving stability and rolling resistance are assessed by the following methods, and the results thereof are shown in Tables 1 and 2.

Road noise:

Test tires of each of the examples were mounted onto wheels of a rim size of 15 × 6 1/2 JJ respectively, and then were installed to the four wheels of a rear drive vehicle of the 2000 cc class. Then, the vehicle was run on a paved road in a state where: an air pressure was 190 kPa; and a speed was 60 km/h. Through a microphone installed at the center of rear sheets of the vehicle, sound pressure levels (in dB) at frequencies around 40 Hz and around 100 Hz were measured. Results of the assessment are shown in differences from a standard value (of the conventional example). A negative value in minus means that road noise is smaller than the standard value, and a positive value means that road noise is larger than the standard value.

Riding comfort:

Test tires of each of the examples were mounted onto wheels of a rim size of 15 × 6 1/2 JJ respectively, and then were installed to the four wheels of a rear drive vehicle of the 2000 cc class. Feeling tests by 5 test drivers were then performed in a state where an air pressure was 190 kPa. In each of the feeling tests, a driver assessed a vibration damping property and harshness in a 7-point scale (from -3 to 3), respectively. Results of the assessment are shown in averages of values thus given by the five drivers. A higher value there means that riding comfort is higher.

Driving stability:

Test tires of each of the examples were mounted onto wheels of a rim size of 15 × 6 1/2 JJ respectively, and then were installed to the four wheels of a rear drive vehicle of the 2000 cc class. Feeling tests by 5 test drivers were then performed in a state where an air pressure was 190 kPa. In each of the feeling tests, driving stability was evaluated in a 7-point scale (from -3 to 3). Results of the assessment are shown in averages of values thus given by the five drivers. A higher value there means that driving stability is higher.

Rolling resistance:

Each of the test tires was mounted onto an wheel of a rim size of 15 × 6 1/2 JJ, and then rolling resistance was measured in a state where: an air pressure was 190 kPa; a speed was 80 km/h; and a load was 4.6 kN, by using a drum-type tire testing machine. Results of the assessment are shown in index numbers where a rolling resistance value of the conventional example is taken as 100. A higher value of the index number means that rolling resistance is higher.

Table 1

| | Conventional example | Example 1 | Example 2 | Example 3 | Example 4 | Example 5 | Example 6 | Example 7 |
|---|---|---|---|---|---|---|---|---|
| Presence of auxiliary filler | Not present | Present | Present | Present | Present | Present | Present | Present |
| Hardness of auxiliary filler | - | 70 | 75 | 96 | 70 | 70 | 80 | 80 |
| Distance to upper end of auxiliary filler (A2-C2) (mm) | - | 10 | 15 | 45 | 15 | 15 | 15 | 15 |
| Distance to upper end of auxiliary filler (B2-C2) (mm) | - | 35 | 30 | 0 | 30 | 30 | 30 | 30 |
| Distance to lower end of auxiliary filler (A1-C1) (mm) | - | 0 | 10 | 20 | 20 | 20 | 20 | 20 |
| Distance to lower end of auxiliary filler (E2 -C1) (mm) | - | 20 | 10 | 0 | 15 | 15 | 15 | 15 |
| Thickness of auxiliary filler (mm) | - | 0.5 | 1.0 | 20 2.0 | 1.5 | 1.5 | 1.5 | 1.5 |
| Hardness of bead filler | 74 | 74 | 74 | 74 | 74 | 74 | 74 | 80 |
| Height of bead filler (mm) | 60 | 20 | 30 | 40 | 40 | 40 | 40 | 40 |
| Shape index of bead filler | 1.0 | 0.33 | 0.6 | 1.0 | 0.6 | 0.6 | 0.6 | 0.6 |
| Road noise (in 125 Hz band) | Standard | -0,8 | -0.5 | -0.2 | -0.3 | -0.3 | -0.3 | -0.3 |
| Riding comfort (damping property) | 0 | 1.0 | 2.0 | 3.0 | 1.2 | 1.2 | 1.0 | 0.8 |
| Driving stability | 0 | 1.0 | 2.0 | 3.0 | 1.3 | 2.1 | 2.6 | 3.0 |
| Road noise (in 40 Hz band) | Standard | -0.1 | -0.5 | -1.0 | -0.4 | -0.8 | -0.9 | -0.9 |
| Riding comfort (harshness) | 0 | 2.0 | 1.0 | 0 | 0.7 | 0.4 | 0 | 0 |
| Rolling resistance | 100 | 95 | 97 | 98 | 96 | 97 | 98 | 99 |

Table 2

| | Comparative example 1 | Comparative example 2 | Comparative example 3 | Comparative example 4 | Comparative example 5 | Comparative example 6 | Comparative example 7 | Comparative example 8 | Comparative example 9 | Comparative example 10 |
|---|---|---|---|---|---|---|---|---|---|---|
| Presence of auxiliary filler | Present | Present | Present | Present | Present | Present | Present | Present | Present | Present |
| Hardness of auxiliary filler | 60 | 75 | 75 | 70 | 70 | 96 | 96 | 75 | 70 | 96 |
| Distance to upper end of auxiliary filler (A2-C2) (mm) | 10 | 5 | 15 | 10 | 10 | 45 | 45 | 15 | 10 | 45 |
| Distance to upper end of auxiliary filler (B2-C2) (mm) | 35 | 30 | -5 | 35 | 35 | 0 | 0 | 30 | 35 | 0 |
| Distance two lower end of auxiliary filler (A1-C1) (mm) | 0 | 10 | 10 | -5 | 0 | 20 | 20 | 10 | 0 | 20 |
| Distance to lower end of auxiliary filler (E2-C1) (mm) | 20 | 10 | 10 | 20 | 30 | 0 | 0 | 10 | 20 | 0 |
| Thickness of auxiliary filler (mm) | 0.5 | 1.0 | 1.0 | 0.5 | 0.5 | 2.5 | 0.3 | 1.0 | 0.5 | 2.0 |

| | Comparative example 1 | Comparative example 2 | Comparative example 3 | Comparative example 4 | Comparative example 5 | Comparative example 6 | Comparative example 7 | Comparative example 8 | Comparative example 9 | Comparative example 10 |
|---|---|---|---|---|---|---|---|---|---|---|
| Hardness of bead filler | 74 | 74 | 74 | 74 | 74 | 74 | 74 | 74 | 74 | 74 |
| Height of bead filler (mm) | 20 | 30 | 30 | 20 | 20 | 40 | 40 | 10 | 20 | 40 |
| Shape index of bead filler | 0.33 | 0.6 | 0.6 | 0.33 | 0.33 | 1.0 | 1.0 | 0.6 | 1.2 | 0.25 |
| Road noise (in 125 Hz band) | -0.9 | -0.5 | -0.4 | The same performances as the example 1. Not so many advantages as this is too excessive in weight. | -0.8 | -0.1 | Impossible to be fabricated | -0.6 | -0.8 | -0.1 |
| Riding comfort (damping property) | 0 | 2.0 | 1.0 | | 1.0 | 3.0 | | 0 | 0 | 3.0 |
| Driving stability | 0 | 2.0 | -1.0 | | -1.0 | 3.0 | | -1.0 | -1.0 | 3.0 |
| Road noise (in 40Hz band) | 0.1 | -0.6 | -0.1 | | 0.1 | -0.9 | | 0.3 | 0.3 | -0.9 |
| Riding comfort (harshness) | 2.0 | 0 | 2.0 | | 1.0 | -1.0 | | 2.0 | 2.0 | -1.0 |
| Rolling resistance | 92 | 102 | 96 | | 95 | 101 | | 95 | 100 | 101 |

EP 1 640 188 B1

As apparent from these Tables 1 and 2, in driving stability, road noise, riding comfort and rolling resistance, all of the examples 1 to 7 showed excellent results as compared to those of the conventional example. On the other hand, each of the comparative examples 1 to 10 showed inferior results in at least one of driving stability, road noise, riding comfort and rolling resistance, because it did not satisfy a part of the conditions defined in the present invention.

Next, blending examples for a rubber composition forming the auxiliary fillers are shown in Table 3.

Table 3

| | Rubber composition forming auxiliary filler | | | |
|---|---|---|---|---|
| | I | II | III | IV |
| Natural rubber * 1 | 70 | 70 | 70 | 70 |
| SBR *2 | 30 | 30 | 30 | 30 |
| Carbon black *3 | 55 | 40 | 50 | 60 |
| Silica *4 | 10 | 68 | 45 | 35 |
| Silane cuppling agent *5 | 1 | 6 | 4 | 3 |
| Zinc oxide *6 | 7 | 7 | 7 | 7 |
| Stearic acid *7 | 2 | 2 | 2 | 2 |
| Antioxidant *8 | 1 | 1 | 1 | 1 |
| Vulcanization accelerator *9 | 1.5 | 1.5 | 1.5 | 1.5 |
| Sulfur *10 | 7 | 5 | 5 | 5 |
| Loss tangent (tan δ) (at 60 °C) | 0.19 | 0.2 | 0.21 | 0.24 |
| Degree of hardness (at 23°C) | 70 | 96 | 85 | 86 |
| Breaking elongation (at 23°C) | 208 | 201 | 203 | 213 |
| In the table, *1:RSS#3, *2: Nipol 1502 manufactured by ZEON Corporation, *3: DIA-HA manufactured by Mitsubishi Chemical Corporation, *4: Nipsil AQ manufactured by Nippon Silica Industrial, *5: Si-69 manufactured by Degussa AG, *6: Zinc oxide No. 3 manufactured by Seido Chemical Industry, *7: manufactured by NOF Corporation, *8: SANTOFLEX 6PPD manufactured by FLEXSIS, *9: Nocceler CZ manufactured by Ouchi Shinko Chemical Industrial, and *10: manufactured by Karuizawa Refinery | | | | |

By forming the auxiliary filler by use of one of the rubber compositions shown in Table 3, while rolling resistance can be reduced, durability can be enhanced and additionally casing stiffness can be increased.

Next, blending examples for a rubber composition forming the sidewall rubber layer are shown in Table 4.

Table 4

| | Rubber composition forming sidewall rubber layer | | | |
|---|---|---|---|---|
| | V | VI | VII | VIII |
| Natural rubber *1 | 40 | 40 | 40 | 40 |
| BR *2 | - | - | - | 20 |
| Halogenated PMS modified polymer *3 | 60 | 60 | 60 | 40 |
| Zinc flower *4 | 3 | 3 | 3 | 3 |
| Stearic acid *5 | 2 | 2 | 2 | 2 |
| Carbon black *6 | 50 | 50 | 50 | 50 |

(continued)

| | Rubber composition forming sidewall rubber layer | | | |
|---|---|---|---|---|
| | V | VI | VII | VIII |
| Aromatic oil *7 | 20 | 20 | 20 | 20 |
| Vulcanization accelerator (CZ) *8 | 1 | 1 | 1 | 1 |
| Powdered sulfur *9 | 1.84 | 1.84 | 1.84 | 1.84 |
| Tall oil rosin *10 | 1.0 | - | - | - |
| Lauric acid | - | 1.0 | - | 2.0 |
| Linolenic acid | - | - | 1.0 | - |

In the table, *1: SMR-20,
*2: UBEPOL BR-150 manufactured by UBE Industries,
*3: including a content of Br at 1.0% and a content of PMS at 5.0%,
*4: Ginrei zinc flower manufactured by Toho Zinc,
*5: beads stearic scid manufactured by NOF Corporation,
*6: Asahi #60 manufactured by Chubu Carbon,
*7: TEZOLEX No. 3 manufactured by Showa Shell Sekiyu
*8: Sun Celler CM-G manufactured by Sanshin Chemistry,
*9: powdered sulfur manufactured by Karuizawa Refinery
*10: HARTALL R-WW manufactured by Harima Chemicals, Inc.

By forming the sidewall rubber layer by use of one of the rubber compositions shown in Table 4, even in a case where the sidewall rubber layer is formed thinly along with an addition of the auxiliary filler, its weather resistance can be maintained at an excellent level.

## Claims

1. A pneumatic tire in which a carcass layer (4) is mounted between a pair of a left and a right bead portions (3) ; a plurality of belt layers (6) is arranged on an outer periphery of a carcass layer located in a tread portion; and a bead filler (7) is arranged on an outer periphery of a bead core (5) in each of the bead portions, wherein:

   the bead filler is made wider than a triangle formed by connecting its base and top, in a cross-sectional view taken along a meridian of the tire; and a sheet-like auxiliary filler (8) is arranged from the sidewall portion (2) to the bead portion (3), the sheet-like auxiliary filler having a thickness of 0.5 to 2.0 mm and being formed of a material harder than neighboring rubber compositions except for a rubber composition of the bead filler, and when: on an inner surface of the tire, a point located at an upper end of the bead core is denoted as A1; a point at which a perpendicular line extended down from an end of the layered part of the belt layers intersects with the inner surface of the tire is denoted as A2; points by which a periphery length from A1 to A2 is divided into three equal parts are denoted as B1 and B2 in the order of proximity to the bead core; a lower end and an upper end of the auxiliary filler are denoted as C1 and C2 respectively; a top of the bead filler is denoted as D; points by which a height L of the bead filler in a radial direction of the tire is divided into three equal parts are denoted as E1 and E2 in the order of proximity to the bead core, the top D of the bead filler is at a position lower than the point B1 and at least 5 mm higher than the rim flange; the tire being **characterized in that** the lower end C1 of the auxiliary filler is at a position higher than the point A1 and lower than the point E2; and **in that** the upper end C2 of the auxiliary filler is at a position lower than the point A2, apart from the point A2 by at least 10 mm, and higher than the point B2.

2. The pneumatic tire according to claim 1, wherein:

   with a filler width denoted by $b$ at a base of the bead filler, a filler width denoted by $bx$ at a position lower than, and apart by a distance X from, the top D of the bead filler satisfies the following relation:

   $bx = b \times (X/L)^n$, where $n$ is an index defining a shape of the bead filler, and satisfies $1/3 \leq n \leq 1$.

3. The pneumatic tire according to any one of claims 1 and 2, wherein:

the auxiliary filler is arranged outward of the carcass layer in a width-wise direction of the tire.

4. The pneumatic tire according to any one of claims 1 to 3, wherein:

a thickness of the auxiliary filler is uniform.

5. The pneumatic tire according to any one of claims 1 to 4, wherein:

the bead filler is formed of elastomer having a JIS-A hardness of 70 to 100.

6. The pneumatic tire according to any one of claims 1 to 5, wherein:

the auxiliary filler is formed of elastomer having a JIS-A hardness of 70 to 100.

7. The pneumatic tire according to any one of claims 1 to 5, wherein:

the auxiliary filler is formed of a rubber composition, which has a loss tangent (tanδ) of 0.01 to 0.25 when measured at a temperature of 60 °C, a JIS-A hardness of 70 to 95 when measured at a temperature of 23 °C, and a breaking elongation not less than 200% when measured at a temperature of 23 °C in a tensile test.

8. The pneumatic tire according to any one of claims 1 to 7, wherein:

a sidewall rubber layer arranged outward of the auxiliary filler in a width-wise direction of the tire is formed of a rubber composition including, in 100 weight parts of a rubber component, 20 to 70 weight parts of rubber formed by halogenating a copolymer obtained by causing isoolefin to react with paramethyl styrene and 30 to 80 weight parts of diene rubber.

**Patentansprüche**

1. Pneumatischer Reifen, in dem eine Karkassenschicht (4) zwischen einem Paar eines linken und eines rechten Wulstrandabschnitts (3) angebracht ist; eine Mehrzahl von Gürtelschichten (6) auf einem Außenumfang einer Karkassenschicht, die in einem Laufflächenabschnitt positioniert ist, angeordnet ist; und ein Wulstrandfüller (7) auf einem Außenumfang eines Wulstrandkerns (5) in jedem der Wulstrandabschnitte angeordnet ist, bei dem:

der Wulstrandfüller weiter als ein Dreieck gefertigt ist, das durch Verbinden seiner Basis und Oberseite, in einer Querschnittsansicht, die entlang eines Meridians des Reifens genommen wird, ausgebildet wird; und ein lagenförmiger Hilfsfüller (8) von dem Seitenwandabschnitt (2) zum Wulstrandabschnitt (3) angeordnet ist, wobei der lagenförmige Hilfsfüller eine Dicke von 0,5 bis 2,0 mm aufweist und aus einem Material ausgebildet ist, das härter als benachbarte Gummizusammensetzungen ist, mit Ausnahme einer Gummizusammensetzung des Wulstrandfüllers, und
wenn: auf einer Innenoberfläche des Reifens, ein Punkt, der an einem oberen Ende des Wulstrandkerns positioniert ist, als A1 bezeichnet wird; ein Punkt, an dem eine senkrechte Linie, die sich von einem Ende des geschichteten Teils der Gürtelschichten nach unten erstreckt, sich mit der Innenoberfläche des Reifens schneidet, als A2 bezeichnet wird; Punkte, durch die eine Umfangslänge von A1 bis A2 in drei gleiche Teile unterteilt wird, in der Reihenfolge zur Nähe zum Wulstrandkern als B1 und B2 bezeichnet werden; ein unteres Ende und ein oberes Ende des Hilfsfüllers entsprechend als C1 und C2 bezeichnet werden; eine Oberseite des Wulstrandfüllers als D bezeichnet wird; Punkte, durch die eine Höhe L des Wulstrandfüllers in einer radialen Richtung des Reifens in drei gleiche Teile unterteilt wird, in der Reihenfolge zur Nähe des Wulstrandfüllers als E1 und E2 bezeichnet werden, die Oberseite D des Wulstrandfüllers sich an einer tieferen Position als der Punkt B1 und wenigstens 5 mm höher als das Felgenhorn befindet;

wobei der Reifen **dadurch gekennzeichnet ist, dass** das untere Ende C1 des Hilfsfüllers sich an einer höheren Position als der Punkt A1 und einer tiefern Position als der Punkt E2 befindet; und **dadurch**, dass das obere Ende C2 des Hilfsfüllers sich an einer tiefern Position als der Punkt A2, um wenigstens 10 mm entfernt von dem Punkt A2, und einer höhern Position als der Punkt B2 befindet.

2. Pneumatischer Reifen nach Anspruch 1, bei dem:

   wenn eine Füllerbreite an einer Basis des Wulstrandfüllers mit *b* bezeichnet wird, eine Füllerbreite an einer Position unterhalb von und um einen Abstand X von der Oberseite D entfernt als *bx* bezeichnet wird, der Wulstrandfüller die folgende Beziehung erfüllt:

   $bx = b \times (X/L)^n$, wobei n ein Index ist, der eine Gestalt des Wulstrandfüllers definiert, und $1/3 \leq n \leq 1$ erfüllt.

3. Pneumatischer Reifen nach Anspruch 1 oder 2, bei dem:

   der Hilfsfüller in einer Breitenrichtung des Reifens außerhalb der Karkassenschicht angeordnet ist.

4. Pneumatischer Reifen nach einem der Ansprüche 1 bis 3, bei dem:

   eine Dicke des Hilfsfüllers gleichförmig ist.

5. Pneumatischer Reifen nach einem der Ansprüche 1 bis 4, bei dem:

   der Wulstrandfüller aus Elastomer ausgebildet ist, das eine JIS-A Härte von 70 bis 100 aufweist.

6. Pneumatischer Reifen nach einem der Ansprüche 1 bis 5, bei dem:

   der Hilfsfüller aus einem Elastomer ausgebildet ist, das eine JIS-A Härte von 70 bis 100 aufweist.

7. Pneumatischer Reifen nach einem der Ansprüche 1 bis 5, bei dem:

   der Hilfsfüller aus einer Gummizusammensetzung ausgebildet ist, die eine Verlusttangente (tanδ) von 0,01 bis 0,25, gemessen bei einer Temperatur von 60°C, eine JIS-A Härte von 70 bis 95, gemessen bei einer Temperatur von 23°C, und eine Bruchdehnung von nicht weniger als 200%, gemessen bei einer Temperatur von 23°C bei einer Dehnungsprüfung, aufweist.

8. Pneumatischer Reifen nach einem der Ansprüche 1 bis 7, bei dem:

   eine Seitenwandgummischicht, die in einer Breitenrichtung des Reifens außerhalb des Hilfsfüllers angeordnet ist, aus einer Gummizusammensetzung ausgebildet ist, die in 100 Gewichtsteilen einer Gummizusammensetzung, 20 bis 70 Gewichtsteile von Gummi, das durch Halogenisieren eines Copolymers ausgebildet wird, das durch Veranlassen einer Reaktion von Isoolefin mit Parametylstyren erhalten wird, und 30 bis 80 Gewichtsteile von Diengummi enthält.

**Revendications**

1. Bandage pneumatique dans lequel une couche de carcasse (4) est installée entre une paire de portions de talon gauche et droite (3); une pluralité de couches de ceinture (6) est agencée sur une périphérie externe d'une couche de carcasse située dans une portion de bande de roulement; et un bourrage sur tringle (7) est agencé sur une périphérie externe d'une tringle (5) dans chacune des portions de talon, où:

   le bourrage sur tringle est réalisé plus large qu'un triangle formé en reliant sa base et son dessus, en une vue en section transversale prise le long d'une méridienne du bandage; et une charge auxiliaire en forme de feuille (8) est agencée de la portion de paroi latérale (2) à la portion de talon (3), la charge auxiliaire en forme de feuille ayant une épaisseur de 0,5 à 2,0 mm et étant réalisée en un matériau plus dur que des compositions de caoutchouc avoisinantes à l'exception d'une composition de caoutchouc du bourrage sur tringle, et lorsque: sur une surface interne du bandage, un point situé à une extrémité supérieure de la tringle est indiqué par A1; un point auquel une ligne perpendiculaire s'étendant vers le bas depuis une extrémité de la partie ceinturée des couches de ceinture se croisent avec la surface interne du bandage est indiqué par A2; des points par lesquels une longueur périphérique de A1 à A2 est divisée en trois parties égales sont indiqués par B1 et B2 dans l'ordre de proximité à la tringle; une extrémité inférieure et une extrémité supérieure de la charge auxiliaire sont indiquées par C1 et C2 respectivement; un dessus du bourrage sur tringle est indiqué par D; des points par lesquels une hauteur L du bourrage sur tringle dans une direction radiale du bandage est divisée en trois parties égales sont indiqués par E1 et E2 dans l'ordre de proximité à la tringle, le dessus D du bourrage sur tringle est à une position plus basse que le point B1 et au moins 5 mm plus haut que la joue de jante; le bandage étant **caractérisé en ce que** l'extrémité inférieure C1 de la charge auxiliaire se trouve à une position plus haute que le point A1 et plus basse que le point E2; et **en ce que** l'extrémité supérieure C2 de la charge auxiliaire est à une position plus basse que le point A2, espacée du point A2 d'au moins 10 mm et plus haute que le point B2.

2. Bandage pneumatique selon la revendication 1, dans lequel:

   une largeur de bourrage indiquée par $b$ à une base du bourrage sur tringle, une largeur de bourrage indiquée par $bx$ à une position plus basse que, et espacée d'une distance X du dessus D du bourrage sur tringle satisfait à la relation suivante:

   $bx=b$ x $(X/L)^n$, où $n$ est un indice définissant une forme du bourrage sur tringle, et satisfait à $1/3 \leq n \leq 1$.

3. Bandage pneumatique selon l'une quelconque des revendications 1 et 2, dans lequel:

   la charge auxiliaire est agencée à l'extérieur de la couche de carcasse dans le sens de la largeur du bandage.

4. Bandage pneumatique selon l'une quelconque des revendications 1 à 3, dans lequel:

   une épaisseur de la charge auxiliaire est uniforme.

5. Bandage pneumatique selon l'une quelconque des revendications 1 à 4, dans lequel:

   le bourrage sur tringle est réalisé en élastomère ayant une dureté JIS-A de 70 à 100.

6. Bandage pneumatique selon l'une quelconque des revendications 1 à 5, dans lequel:

   la charge auxiliaire est réalisée en élastomère ayant une dureté JIS-A de 70 à 100.

7. Bandage pneumatique selon l'une quelconque des revendications 1 à 5, dans lequel:

   la charge auxiliaire est réalisée en une composition de caoutchouc, qui présente une tangente de perte (tanδ) de 0,01 à 0,25 lorsqu'elle est mesurée à une température de 60°C, une dureté JIS-A de 70 à 95 lorsqu'elle est mesurée à une température de 23°C, et un allongement à la rupture non inférieur à 200% lorsqu'il est mesuré à une température de 23°C dans un test de traction.

8. Bandage pneumatique selon l'une quelconque des revendications 1 à 7, dans lequel:

   une couche de caoutchouc de paroi latérale agencée à l'extérieur de la charge auxiliaire dans le sens de la largeur du bandage est réalisée en une composition de caoutchouc incluant, en 100 parties en poids d'un composant de caoutchouc, 20 à 70 parties en poids de caoutchouc formé par halogénation d'un copolymère obtenu en amenant l'isooléfine à réagir avec du paraméthyl styrène et 30 à 80 parties en poids de caoutchouc diène.

## Fig.1

## Fig.2

**Fig.3**

# Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI8276713 B

- JP 2001071715 A